# EUROPEAN PATENT APPLICATION

(11) **EP 1 630 733 A1**
(43) Date of publication of application: **01.03.2006**
(21) Application number: 04716773.9
(22) Date of filing: 03.03.2004
(51) Int. Cl.: G06Q 10/00

(54) **WORKFLOW MANAGEMENT DEVICE**

(30) Priority: 02.06.2003 JP 2003156780
(71) Applicant: MITSUBISHI DENKI KABUSHIKI KAISHA, Tokyo 100-8310 (JP)
(72) Inventor: TAKASUGI, Hideki, c/o Mitsubishi Denki K. K., Tokyo 100-8310 (JP); OKAWA, Tsutomu, c/o Mitsubishi Denki K. K., Tokyo 100-8310 (JP)
(74) Representative: Nicholls, Michael John
(86) International application number: PCT/JP2004/002600
(87) International publication number: WO 2004/109573

(57) **Abstract**

A workflow management apparatus includes a circulation destination specification unit 14 for managing a status of circulation of an electronic document registered by a registration unit 12, and for specifying a next person to whom the electronic document is to be circulated for the next time with reference to workflow information registered by the registration unit 12, and a notification unit 15 for transmitting a notification of circulation of the electronic document to a terminal used by the next person specified by the circulation destination specification unit 14. In response to a request for circulation of the electronic document from the terminal used by the next person to whom the notification unit 15 has transmitted a notification of circulation of the electronic document, the workflow management apparatus allows the next person to peruse and check the electronic document registered by the registration unit 12.

## Description

### Field of the Invention

The present invention relates to a workflow management apparatus for and a workflow management system for managing circulation of electronic documents.

### Background of the Invention

In a prior art workflow management apparatus, two or more processors are connected to one another via a network, and are so constructed as to transmit and receive information to and from one another (for example, refer to patent reference 1)
· Patent reference 1
Japanese patent publication No. 3,200,877 (paragraph numbers [0014] to [0022] and Fig. 2))

A problem with the prior art workflow management apparatus constructed as mentioned above is that while the two or more processors can transmit and receive electronic documents to and from one another, it is necessary to register the destinations of circulation of electronic documents, the destination of return of electronic documents to which no seal of approval is given, and so on into all the processors, and there is a necessity for users to execute a burdensome procedure at the time of circulating electronic documents. A further problem is that it is difficult for users to grasp the current status of circulation of electronic documents.

The present invention is made in order to solve the above-mentioned problems, and it is therefore an object of the present invention to provide a workflow management apparatus that can provide circulation of electronic documents without users executing a burdensome procedure.

It is another object of the present invention to provide a workflow management apparatus that enable users to easily grasp the current status of circulation of electronic documents.

### Disclosure of the Invention

A workflow management apparatus in accordance with the present invention includes a circulation destination specification means for managing a status of circulation of an electronic document registered by a registration means, and for specifying a next person to whom the electronic document is to be circulated for a next time with reference to workflow information registered by the registration means, and, in response to a request for circulation of the electronic document from a terminal used by the next person specified by the circulation destination specification means, allows the next person to peruse and check the electronic document registered by the registration means.

Therefore, the workflow management apparatus offers an advantage of being able to carry out circulation of an electronic document only by allowing a person who desires to circulate the electronic document to register the electronic document and workflow information into the workflow management apparatus.

### Brief Description of the Figures

Fig. 1 is a block diagram showing a workflow management apparatus in accordance with embodiment 1 of the present invention;
Fig. 2 is a flow chart showing processing performed by the workflow management apparatus in accordance with embodiment 1 of the present invention;
Fig. 3 is an explanatory drawing showing workflow information;
Fig. 4 is an explanatory drawing showing a current status management table;
Figs. 5(a) and 5(b) are explanatory drawings each showing a current status management table;
Fig. 6 is a block diagram showing a workflow management apparatus in accordance with embodiment 2 of the present invention; and
Fig. 7 is a block diagram showing a workflow management system in accordance with embodiment 4 of the present invention.

### Preferred Embodiments of the Invention

Hereafter, in order to explain this invention in greater detail, the preferred embodiments of the present invention will be described with reference to the accompanying drawings.

### Embodiment 1.

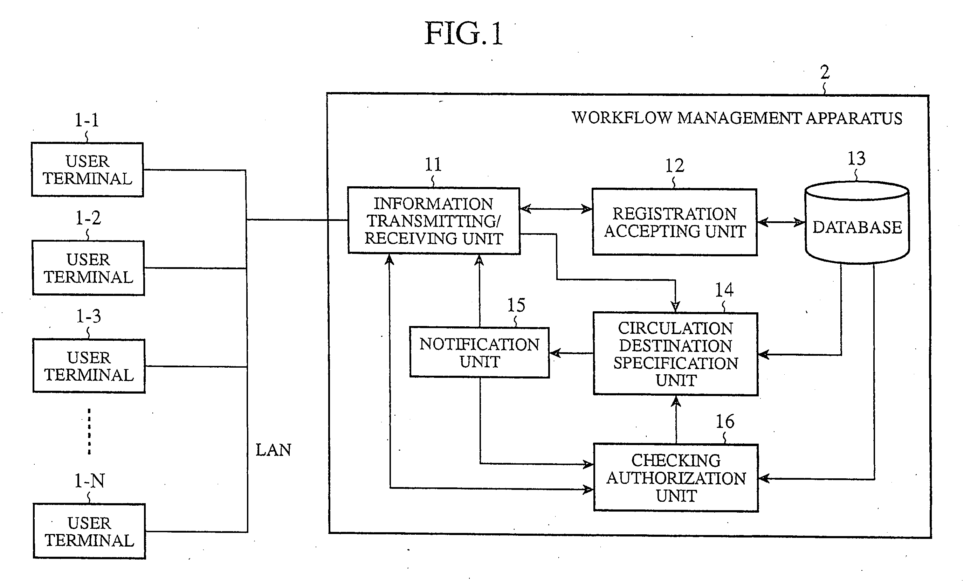

Fig. 1 is a block diagram showing a workflow management apparatus in accordance with embodiment 1 of the present invention. In the figure, first through N-*th* user terminals 1-1 to 1-N, each of which is terminal equipment, such as a personal computer or a mobile PC, are connected with the workflow management apparatus 2 via a network, such as a LAN or the Internet. A user can use one of the plurality of user terminals 1-1 to 1-N when registering an electronic document into the workflow management apparatus 2 or when perusing and checking a electronic document circulated to the user. The workflow management apparatus 2 is provided with a function of managing circulation of electronic documents.

An information transmitting/receiving unit 11 is provided with a function of transmitting and receiving various types of pieces of information to and from each of the plurality of user terminals 1-1 to 1-N. For example, when the information transmitting/receiving unit 11 receives a request for registration of an electronic document from the first user terminal 1-1, a registration accepting unit 12 refers to a user ID contained in the registration request, a person who has made the registration request having the user ID, and determines whether the person who has made the registration request has the authority to register the electronic document into the workflow management apparatus 2. Then, only when the person who has made the registration request has the authority to register the electronic document into the workflow management apparatus 2, the registration accepting unit 12 accepts the request for registration of the electronic document and corresponding workflow information and stores the electronic document and the workflow information in a data base 13. The data base 13 is a memory for storing electronic documents, workflow information and so on. A registration means includes the registration accepting unit 12 and the data base 13.

A circulation destination specification unit 14 manages a current status of circulation of each electronic document stored in the data base 13, and constitutes a circulation destination specification means for specifying the next destination of circulation of each electronic document by referring to corresponding workflow information stored in the data base 13. A notification unit 15 constitutes a notification means for transmitting a notification of circulation of each electronic document to the next circulation destination's user terminal specified by the circulation destination specification unit 14. A checking authorization unit 16 constitutes a checking authorization means for, when the information transmitting/receiving unit 11 receives a request for circulation of an electronic document from a user terminal which a user who is the next circulation destination uses and which has received a notification of circulation of the electronic document from the notification unit 15, allowing the user to peruse and check the electronic document stored in the data base 13.

The information transmitting/receiving unit 11, the registration accepting unit 12, the circulation destination specification unit 14, the notification unit 15, and the checking authorization unit 16 can be constructed of a piece of special-purpose hardware (for example, a slot board that consists of an IC circuit and can be inserted into a slot of a computer). As an alternative, there can be provided a computer not shown for executing a software program in which processes performed by those components are described in a language.

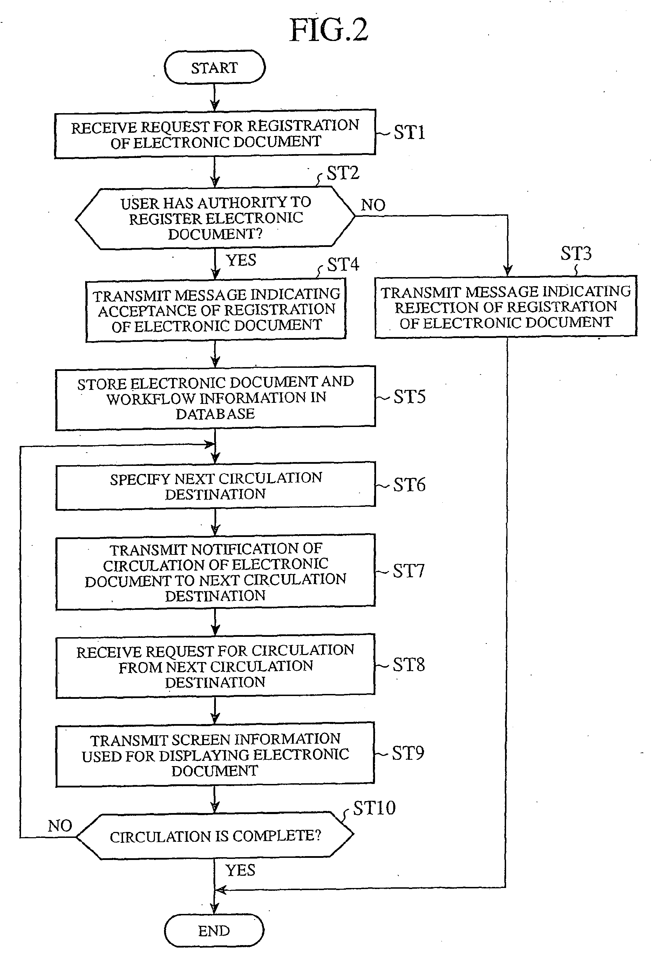

Fig. 2 is a flow chart showing processing performed by the workflow management apparatus in accordance with embodiment 1 of the present invention.

Next, the operation of the workflow management apparatus in accordance with embodiment 1 of the present invention will be explained.

For example, when a user who uses the first user terminal 1-1 desires to circulate an electronic document, the user operates the first user terminal 1-1 to transmit a request for registration of the electronic document, the request containing the user's user ID, to the workflow management apparatus 2.

When the information transmitting/receiving unit 11 receives the request for registration of the electronic document from the first user terminal 1-1 (in step ST1), the registration accepting unit 12 of the workflow management apparatus 2 refers to the user ID contained in the registration request and then determines whether the user who has made the registration request has the authority to register the electronic document into the workflow management apparatus 2 (in step ST2). For example, the registration accepting unit 12 checks a company, a place of duty or the like to which the user who has made the registration request belongs from the user ID. When determining that the user who has made the registration request belongs to a company, a place of duty, or the like which is allowed to use the workflow management apparatus 2, the registration accepting unit 12 determines that the user who has made the registration request has the authority to register the electronic document into the workflow management apparatus 2.

In contrast, when determining that the user who has made the registration request does not have the authority to register the electronic document into the workflow management apparatus 2, the registration accepting unit 12 transmits a message indicating a rejection of registration of the electronic document to the first user terminal 1-1 via the information transmitting/receiving unit 11 (in step ST3). On the other hand, when determining that the user who has made the registration request has the authority to register the electronic document into the workflow management apparatus 2, the registration accepting unit 12 transmits a message indicating that the workflow management apparatus has accepted the registration of the electronic document to be circulated to the first user terminal 1-1 via the information transmitting/receiving unit 11 (in step ST4).

When the person who has made the registration request then operates the first user terminal 1-1 so as to transmit the electronic document to be circulated and corresponding workflow information to the workflow management apparatus 2, the registration accepting unit 12 stores the electronic document to be circulated and the corresponding workflow information which are received by the information transmitting/receiving unit 11 in the data base 13 (in step ST5).

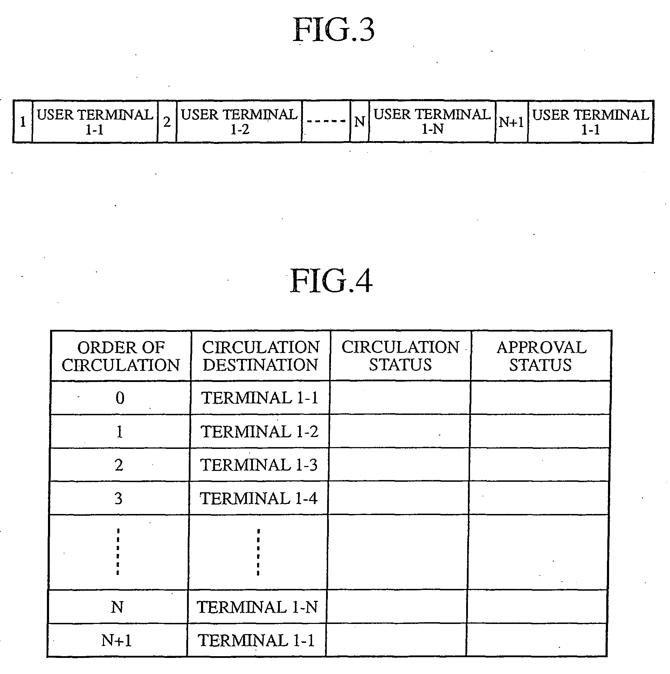

As shown in Fig. 3, the workflow information shows the order in which the electronic document is to be circulated to the plurality of user terminals. In the example of Fig. 3, the order described in the workflow information is as follows: the first user terminal 1-1 -> the second user terminal 1-2 -> the third user terminal 1-3 -> ... -> the N-*th* user terminal 1-N-> the first user terminal 1-1.

The order of circulation shown is an example of order in which the electronic document is serially circulated to the plurality of user terminals. As an alternative, the circulation route of the electronic document can be branched to two or more routes on the way of the electronic document circulation.

When the registration accepting unit 12 thus accepts the registration of the electronic document to be circulated, the circulation destination specification unit 14 of the workflow management apparatus 2 creates a status management table showing the order of circulation, the destinations of circulation of the electronic document, and the circulation status and approval status of the electronic document with reference to the workflow information on the electronic document, and stores the status management table in the data base 13 (see Fig. 4).

When creating the status management table and then storing it in the data base 13, the circulation destination specification unit 14 specifies the first circulation destination or person to whom the electronic document is to be circulated for the first time with reference to the status management table (in step ST6). In this example, the circulation destination specification unit 14 specifies that a user that uses the second user terminal 1-2 is the first person to whom the electronic document is to be circulated for the first time.

When the circulation destination specification unit 14 specifies the first circulation destination to which the electronic document is to be circulated for the first time, the notification unit 15 of the workflow management apparatus 2 transmits a notification of circulation of the electronic document, via the information transmitting/receiving unit 11, to the first circulation destination's user terminal 1-2 (in step ST7).

As a result, when the user who uses the second user terminal 1-2 recognizes that there is an electronic document to be circulated thereto, and then operates the second user terminal 1-2 so as to transmit a request for circulation of the electronic document to the workflow management apparatus 2, the information transmitting/receiving unit 11 of the workflow management apparatus 2 receives the circulation request (in step ST8).

When the information transmitting/receiving unit 11 receives the request for circulation of the electronic document from the second user terminal 1-2 used by the first circulation destination to which the electronic document is to be circulated for the first time, the checking authorization unit 16 of the workflow management device 2 allows the second user terminal 1-2 to retrieve the electronic document stored in the data base 13 and then transmits screen information used for displaying the electronic document to the second user terminal 1-2 (in step ST9).

Thereby, the electronic document is displayed on a display of the second user terminal 1-2, and the user who uses the second user terminal 1-2 is allowed to peruse and check the contents of the electronic document.

The user who uses the second user terminal 1-2 operates the second user terminal 1-2 so as to transmit a notification of approval indicating approval of the contents to the workflow management apparatus 2 when giving a seal of approval to the contents of the electronic document, whereas the user operates the second user terminal 1-2 so as to transmit a notification of approval refusal indicating refusal of approval of the contents to the workflow management apparatus 2 when refusing to give a seal of approval to the contents of the electronic document.

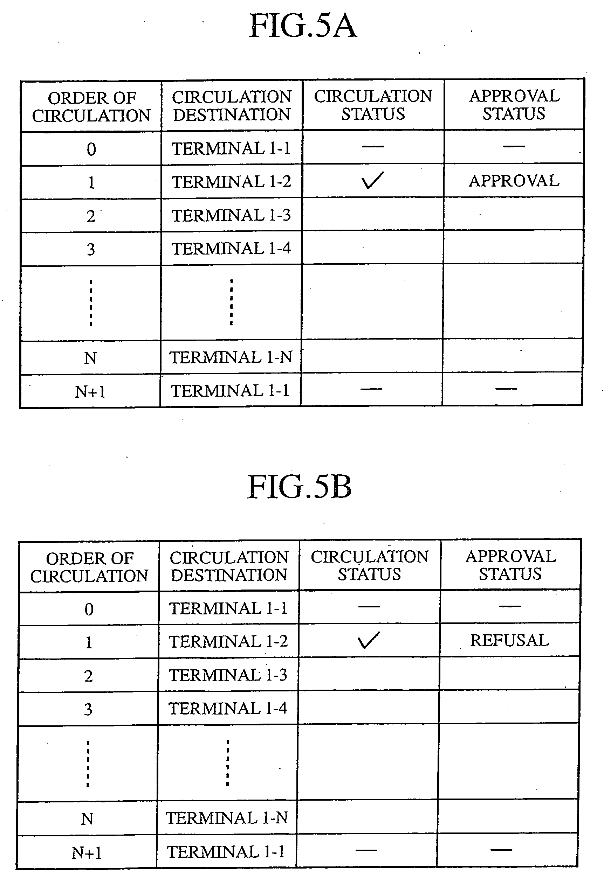

The circulation destination specification unit 14 of the workflow management apparatus 2 sets "approval" to an approval status element of the status management table for the first circulation destination to which the electronic document is to be circulated for the first time while checking a circulation status element of the status management table for the first circulation destination to which the electronic document is to be circulated for the first time, as shown in Fig. 5(a), when the information transmitting/receiving unit 11 receives the notification of approval from the second user terminal 1-2 used by the first circulation destination to which the electronic document is to be circulated for the first time.

In contrast, when receiving the notification of approval refusal from the second user terminal 1-2 used by the first circulation destination to which the electronic document is to be circulated for the first time, the circulation destination specification unit 14 of the workflow management apparatus 2 sets "refusal" to the approval status element of the status management table for the first circulation destination to which the electronic document is to be circulated for the first time while checking the circulation status element of the status management table for the first circulation destination to which the electronic document is to be circulated for the first time, as shown in Fig. 5(b).

The circulation destination specification unit 14 then specifies the second circulation destination or person to whom the electronic document is to be circulated for the second time with reference to the status management table when setting "approval" to the approval status element of the status management table for the first circulation destination to which the electronic document is to be circulated for the first time (in step ST6). In this example, the circulation destination specification unit 14 specifies that a user who uses the third user terminal 1-3 is the second circulation destination to which the electronic document is to be circulated for the second time.

On the other hand, when setting "refusal" to the approval status element of the status management table for the first circulation destination to which the electronic document is to be circulated for the first time, the circulation destination specification unit 14 specifies the 0-*th* circulation destination or person (i.e. , the registrant of the electronic document) with reference to the status management table (in step ST6). In this example, the circulation destination specification unit 14 specifies that the user who uses the first user terminal 1-1 is the 0-*th* circulation destination.

When the circulation destination specification unit 14 specifies the second circulation destination to which the electronic document is to be circulated for the second time, the notification unit 15 of the workflow management apparatus 2 transmits a notification of circulation of the electronic document, via the information transmitting/receiving unit 11, to the third user terminal 1-3 used by the second circulation destination to which the electronic document is to be circulated for the second time (in step ST7).

As a result, when the user who uses the third user terminal 1-3 recognizes that there is an electronic document to be circulated thereto, and then operates the third user terminal 1-3 so as to transmit a request for circulation of the electronic document to the workflow management apparatus 2, the information transmitting/receiving unit 11 of the workflow management apparatus 2 receives the circulation request (in step ST8).

When the information transmitting/receiving unit 11 receives the request for circulation of the electronic document from the third user terminal 1-3 used by the second circulation destination to which the electronic document is to be circulated for the second time, the checking authorization unit 16 of the workflow management apparatus 2 allows the third user terminal 1-3 to retrieve the electronic document stored in the data base 13 and then transmits screen information used for displaying the electronic document to the third user terminal 1-3 (in step ST9).

Thereby, the electronic document is displayed on a display of the third user terminal 1-3, and the user who uses the third user terminal 1-3 is allowed to peruse and check the contents of the electronic document, like the other user who uses the second user terminal 1-2.

On the other hand, when specifying the 0-th circulation destination (i.e. , the registrant of the electronic document), the circulation destination specification unit 14 transmits a notification of the reception of refusal of approval of the electronic document to the 0-th circulation destination's user terminal 1-1 via the information transmitting/receiving unit 11.

As a result, the user who uses the first user terminal 1-1 can recognize that the first circulation destination to which the electronic document is to be circulated for the first time has refused to give a seal of approval to the electronic document.

Then, when desiring a correction of the electronic document, the user who uses the first user terminal 1-1 operates the first user terminal 1-1 so as to transmit a request for correction of the electronic document to the workflow management apparatus 2.

When the information transmitting/receiving unit 11 receives the request for correction of the electronic document from the first user terminal 1-1, the registration accepting unit 12 of the workflow management apparatus 2 transmits electronic data about the electronic document to be circulated to the first user terminal 1-1 via the information transmitting/receiving unit 11.

After that, when the user who uses the first user terminal 1-1 makes a correction to the electronic document and transmits the corrected electronic document to the workflow management apparatus 2, the registration accepting unit 12 stores the corrected electronic document received by the information transmitting/receiving unit 11 in the data base 13 so as to replace the already-stored electronic document to be circulated with the corrected electronic document.

After the 0-*th* circulation destination (i.e., the registrant of the electronic document) has made a correction to the electronic document., the circulation destination specification unit 14 of the workflow management apparatus 2 specifies, as the next circulation destination, the first circulation destination to which the electronic document is to be circulated for the first time, again with reference to the status management table.

After that, since the same processing is repeated, the explanation of the processing will be omitted. When the users who use the second user terminal 1-2, the third user terminal 1-3, the N-*th* user terminal 1-N, respectively, give a seal of approval to the electronic document in turn, and the electronic document then returns to the user who uses the first user terminal 1-1, the circulation of the electronic document is completed (in step ST10).

As can be seen from the above description, in accordance with this embodiment 1, the workflow management apparatus is provided with the circulation destination specification unit 14 for managing the status of circulation of an electronic document registered into the registration accepting unit 12, and for specifying the next circulation destination with reference to workflow information registered into the registration accepting unit 12, and the notification unit 15 for transmitting a notification of circulation of the electronic document to the next circulation destination's user terminal specified by the circulation destination specification unit 14, the workflow management apparatus allowing the next circulation destination to peruse the electronic document registered into the registration accepting unit 12 in response to a request for circulation of the electronic document from the next circulation destination's user terminal to which the notification of circulation of the electronic document has been transmitted by the notification unit 15. Therefore, the present embodiment offers an advantage of being able to carry out circulation of an electronic document only by allowing a person who desires to circulate the electronic document to register the electronic document and corresponding workflow information into the workflow management apparatus 2.

In addition, in accordance with this embodiment 1, when receiving a notification of refusal of approval of the electronic document from a circulation destination's user terminal, the circulation destination specification unit 14 specifies the previous circulation destinations to which the electronic document was circulated before the circulation to the above-mentioned circulation destination with reference to the workflow information and the notification unit 15 transmits a notification of the reception of refusal of approval of the electronic document to the previous circulation destinations' user terminals. Therefore, the present embodiment offers another advantage of being able to enable the previous circulation destinations to which the electronic document was already circulated to recognize that the contents of the electronic document are refused.

Furthermore, in accordance with this embodiment 1, the workflow management apparatus is so constructed as to accept a correction made to the electronic document in response to a request for correction of the electronic document from a previous circulation destination's user terminal. Therefore, the present embodiment 1 offers a further advantage of being able to re-circulate the corrected electronic document.

In addition, in accordance with this embodiment 1, the workflow management apparatus is so constructed as to, when receiving a request for registration of an electronic document from a person who desires to register the electronic document, determine whether the person has the authority to register the electronic document into the workflow management apparatus, and, only when the person has the authority to register the electronic document, accepts the registration of the electronic document and corresponding workflow information. Therefore, the present embodiment 1 offers another advantage of being able to eliminate unapproved use of those who do not have the authority to register any electronic document into the workflow management apparatus.

In accordance with this embodiment 1, the workflow management apparatus creates a status management table with reference to received workflow information, and specifies the next circulation destination with reference to the status management table. It cannot be overemphasized that the workflow management apparatus can alternatively carry out direct reference of the workflow information so as to specify the next circulation destination.

### Embodiment 2.

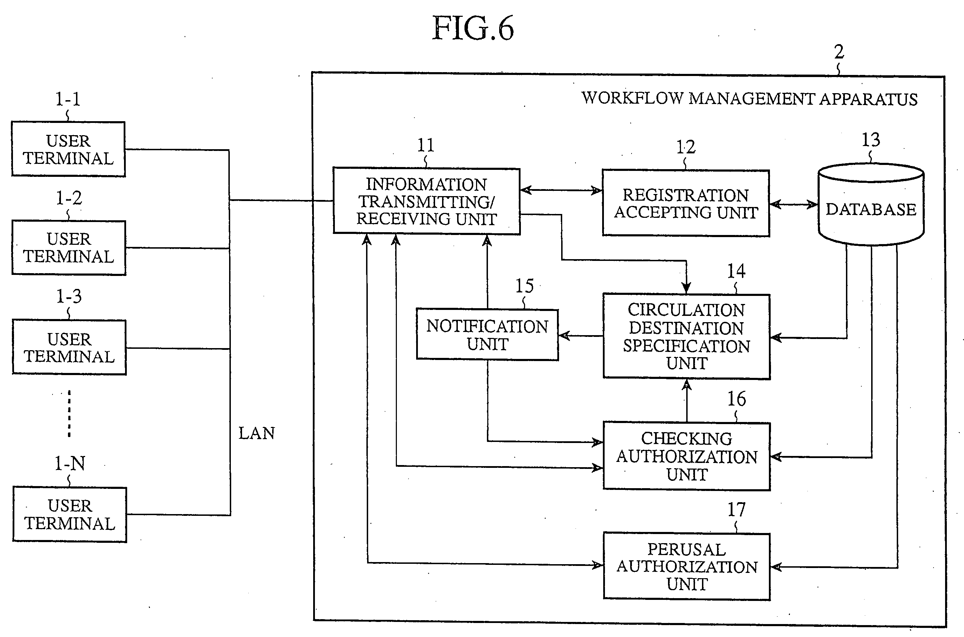

Fig. 6 is a block diagram showing a workflow management apparatus in accordance with embodiment 2 of the present invention. In the figure, since the same reference numerals as shown in Fig. 1 denote the same components or like components, the explanation of these components will be omitted hereafter.

A perusal authorization unit 17 is so constructed as to determine whether a person who desires to peruse an electronic document has the authority to peruse the electronic document in response to a request for perusal of the electronic document from the person's user terminal and to allow the person to peruse the electronic document only when the person has the authority to peruse the electronic document.

The perusal authorization unit 17 can be constructed of a piece of special-purpose hardware (for example, a slot board that consists of an IC circuit and can be inserted into a slot of a computer). As an alternative, there can be provided a computer not shown for executing a software program in which processing carried out by the perusal authorization unit 17 is described in a language.

In accordance with above-mentioned embodiment 1, a user using a user terminal 1-3 which has received a notification of circulation of an electronic document from the notification unit 15 of the workflow management apparatus 2 is allowed to peruse and check the contents of the electronic document. In contrast, in accordance with this embodiment 2, the workflow management apparatus is so constructed as to enable users to peruse and check the contents of the electronic document if they have the authority to peruse the electronic document even though it has not received a notification of circulation of the electronic document.

For example, when a user who uses the N-*th* user terminal 1-N desires to peruse electronic documents, he or she can operate the N-*th* user terminal 1-N so as to transmit a request for perusal of electronic documents containing the user's user ID to the workflow management apparatus 2.

When the information transmitting/receiving unit 11 receives the request for perusal of electronic documents from the N-*th* user terminal 1-N, the perusal authorization unit 17 of the workflow management apparatus 2 determines whether the user who desires to peruse electronic documents has the authority to peruse electronic documents with reference to the user ID contained in the perusal request. For example, the perusal authorization unit 17 specifies the N-*th* user terminal 1-N which the user who desires to peruse electronic documents uses from the user ID, and searches for one or more electronic documents which are to be circulated to the N-*th* user terminal 1-N with reference to a status management table stored in a data base 13. The perusal authorization unit 17 determines that the user who desires to peruse electronic documents has the authority to peruse electronic documents when one or more electronic documents which are to be circulated to the N-*th* user terminal 1-N exist in the status management table.

Only when the user who desires to peruse electronic documents has the authority to peruse electronic documents, the perusal authorization unit 17 transmits both a message indicating allowance of perusal of the one or more electronic documents searched-for and a list of the one or more electronic documents which can be perused by the person to the N-*th* user terminal 1-N.

When the N-*th* user terminal 1-N receives the message and the list from the workflow management apparatus and the user who desires to peruse electronic documents then operates the N-*th* user terminal 1-N so as to select an arbitrary electronic document included in the list, the perusal authorization unit 17 transmit screen information used for displaying the selected electronic document to the N-*th* user terminal 1-N via an information transmitting/receiving unit 11.

Thereby, the electronic document selected by the user who desires to peruse electronic documents is displayed on a display of the N-*th* user terminal 1-N.

In accordance with this embodiment 2, the workflow management apparatus enables users to peruse and check the contents of an electronic document if they have the authority to peruse the electronic document even though it has not received a notification of circulation of the electronic document.

As previously mentioned, in accordance with this embodiment 2, it is assumed that the user who uses the N-*th* user terminal 1-N is the one who desires to peruse an electronic document. As an alternative, a user who uses the second user terminal 1-2 and has already checked the contents of an electronic document can be the one who desires to peruse the electronic document.

### Embodiment 3.

As previously mentioned, the workflow management apparatus in accordance with above-mentioned embodiment 2 is so constructed as to enable users to peruse and check the contents of an electronic document if they have the authority to peruse the electronic document even though it has not received a notification of circulation of the electronic document. In contrast, in accordance with this embodiment 3, when transmitting screen information used for displaying the electronic document the N-*th* user terminal 1-N via an information transmitting/receiving unit 11, a perusal authorization unit 17 also transmits a status management table as shown in Fig. 5 to the N-*th* user terminal 1-N so that any person who desires to peruse the electronic document can check the status of circulation of the electronic document and the status of approval of the electronic document.

As a result, any person who desires to peruse the electronic document can recognize which up to circulation destinations have perused and checked the electronic document circulated thereto and which up to circulation destinations have approved the electronic document.

### Embodiment 4.

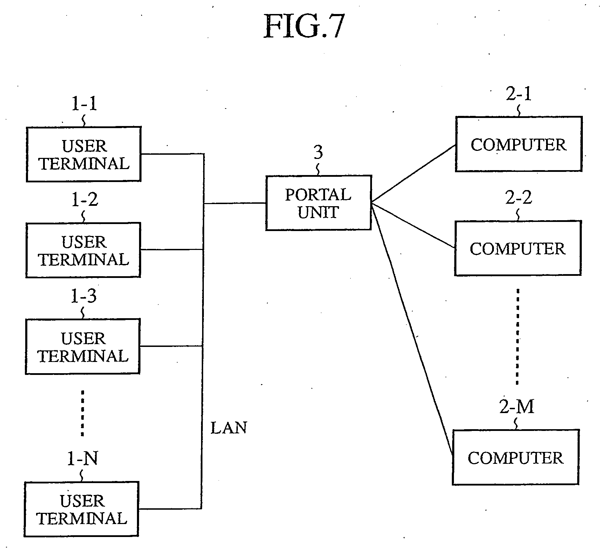

Fig. 7 is a block diagram showing a workflow management system in accordance with embodiment 4 of the present invention. In the figure, since the same reference numerals as shown in Fig. 6 denote the same components or like components, the explanation of these components will be omitted hereafter.

Each of a plurality of computers 2-1 to 2-M has the same function as the workflow management apparatus 2 shown in Fig. 6. A portal unit 3 constitutes a portal means for specifying one to be accessed of the plurality of computers 2-1 to 2-M in response to a request for access from one of a plurality of user terminals 1-1 to 1-N.

In accordance with any one of above-mentioned embodiments 1 to 3, the plurality of user terminals 1-1 to 1-N are directly connected with the workflow management apparatus 2 by way of a LAN. In contrast, in accordance with this embodiment 4, the plurality of user terminals 1-1 to 1-N are connected with the plurality of computers by way of the portal unit 3.

That is, when the plurality of computers 2-1 to 2-M each of which is equivalent to the workflow management apparatus 2 of Fig. 6 exist, it is necessary to separately perform log-in management, management of electronic documents, etc. on the plurality of user terminals 1-1 to 1-N for each of the plurality of computers. Therefore, when a user who uses the first user terminal 1-1 logs in the first computer 2-1, for example, if an electronic document which the user desires to peruse is not registered into the first computer 2-1, the user has inconvenience of having to log in the other computers 2-2 to 2-M so as to look for the desired electronic document.

On the other hand, in accordance with this embodiment 4, since the portal unit 3 of the workflow management apparatus is so constructed as to carry out log-in management instead of the plurality of computers 2-1 to 2-M and to manage electronic documents registered into the plurality of computers 2-1 to 2-M, each of the plurality of user terminals 1-1 to 1-N can access an electronic document registered into either one of the plurality of computer 2-1 to 2-M once each of the plurality of user terminals 1-1 to 1-N logs in the portal unit 3.

To be more specific, when receiving an access request from the N-*th* user terminal 1-N, for example, the portal unit 3 specifies a user who has made the access request from the user's user ID contained in the access request, and also specifies a computer to which the user has access. For example, the portal unit 3 specifies a computer into which an electronic document to be circulated to the N-*th* user terminal 1-N which the user who has made the access request uses is registered, as the computer which the user has access.

For example, when the user who has made the access request has access to the second computer 2-2, the portal unit 3 connects the second computer 2-2 with the N-*th* user terminal 1-N.

Therefore, in accordance with this embodiment 4, even when a plurality of computers 2-1 to 2-M each of which is equivalent to the workflow management apparatus 2 of Fig. 6 exist, a user who uses any one of the plurality of user terminals 1-1 to 1-N can access any electronic document which the user has the authority to peruse, as in the case where only one workflow management apparatus 2 exists.

### Embodiment 5.

In accordance with either of above-mentioned embodiments 1 to 4, when receiving a request for registration of an electronic document, the registration receiving unit 12 registers the electronic document into the workflow management apparatus without checking the contents of corresponding workflow information. In contrast, in accordance with this embodiment 5, a workflow management apparatus is so constructed as to, when managing circulation of an electronic document according to corresponding workflow information, carry out a simulation of whether the electronic document can be circulated as planned, and, only when determining that the electronic document can be circulated as planned, to register the electronic document and the corresponding workflow information thereinto.

In other words, a registration receiving unit 12 of this embodiment is so constructed as to randomly create a request for circulation of an electronic document, a notification of approval or approval refusal, etc. which are transmitted from any one of a plurality of user terminals 1-1 to 1-N, and to obtain results by causing the workflow management apparatus 2 to pseudoly operate using this created data as test data, in simulation.

The registration receiving unit 12 then causes the workflow management apparatus 2 to actually operate by using the created data as test data, and compares the contents of a status management table obtained with the above-mentioned simulation results. When the contents of the obtained status management table agrees with the above-mentioned simulation results, the registration receiving unit 12 determines that the electronic document is circulated as planned.

Therefore, in accordance with this embodiment 5, the workflow management apparatus can register only electronic documents that can be circulated as planned.

### Industrial Applicability

As mentioned above, the workflow management apparatus in accordance with the present invention is suitable for, for example, an operation of, when there is an electronic document to be circulated within a company, circulating the electronic document and receiving approval of the electronic document without users executing a burdensome procedure for registering the electronic document.

## Claims

1. A workflow management apparatus comprising:
a registration means for registering an electronic document to be circulated and workflow information indicating order in which the electronic document is circulated to a plurality of terminals thereinto;
a circulation destination specification means for managing a status of circulation of the electronic document registered by said registration means, and for specifying a next person to whom the electronic document is to be circulated for a next time with reference to the workflow information registered by said registration means; and
a checking authorization means, responsive to a request for circulation of the electronic document from a terminal used by the next person specified by said circulation destination specification means, for enabling said terminal to retrieve the electronic document registered by said registration means to allow the next person to peruse and check the electronic document.

2. The workflow management apparatus according to Claim 1, wherein said apparatus further comprises a notification means for transmitting a notification of circulation of the electronic document to said terminal used by the next person specified by said circulation destination specification means.

3. The workflow management apparatus according to Claim 2, wherein in response to a notification of refusal of approval of the electronic document from a terminal used by a person to whom the electronic document has been circulated, said circulation destination specification means specifies other persons to whom the electronic document has been already circulated before the circulation of the electronic document to said person with reference to the workflow information, and said notification means transmits a notification of reception of refusal of approval of the electronic document to terminals used by said other persons.

4. The workflow management apparatus according to Claim 3, wherein when receiving a request for correction of the electronic document from a terminal used by a person to whom the electronic document has been previously circulated, said registration means accepts a correction made to the electronic document.

5. The workflow management apparatus according to Claim 1, wherein when receiving a request for registration of an electronic document from a terminal used by a person to whom the electronic document has been previously circulated, said registration means determines whether the person has authority to register the electronic document into said workflow management apparatus, and, only when the person has authority to register the electronic document into said workflow management apparatus, accepts registration of the electronic document and workflow information.

6. The workflow management apparatus according to Claim 1, further comprising a perusal authorization means, responsive to a request for perusal of an electronic document registered by said registration means from a person who desires to peruse the electronic document, for determining whether the person has authority to peruse the electronic document, and, only when the person has authority to peruse the electronic document, allows the person to peruse the electronic document.

7. The workflow management apparatus according to Claim 6, wherein said perusal authorization means shows the person a status of circulation of the electronic document when allowing the person to peruse the electronic document.

8. The workflow management apparatus according to Claim 6, wherein said perusal authorization means shows the person a status of approval of the electronic document when allowing the person to peruse the electronic document.

9. The workflow management apparatus according to Claim 2, wherein when said registration means, said circulation destination specification means, said notification means, and said checking authorization means are disposed in each of two or more computers, said apparatus comprises a portal means, responsive to a request for access from an arbitrary terminal, for specifying a computer that is to be accessed by said arbitrary terminal.

10. The workflow management apparatus according to Claim 1, wherein when registering the electronic document to be circulated and the workflow information, said registration means carries out a simulation of circulation of the electronic document.
